# EUROPEAN PATENT SPECIFICATION

(11) **EP 4 656 990 B1**
(45) Date of publication and mention of the grant of the patent: **22.04.2026**
(21) Application number: 24215794.9
(22) Date of filing: 27.11.2024
(51) Int. Cl.: F26B 3/30, F26B 13/00

(54) **DRYING DEVICE AND METHOD OF DRYING ELECTRODE SHEET**
TROCKNUNGSVORRICHTUNG UND VERFAHREN ZUM TROCKNEN EINER ELEKTRODENFOLIE
DISPOSITIF DE SÉCHAGE ET PROCÉDÉ DE SÉCHAGE DE FEUILLE D'ÉLECTRODE

(30) Priority: 28.05.2024 CN 202410675833; 03.07.2024 WO PCT/CN2024/103439
(43) Date of publication of application: 03.12.2025
(73) Proprietor: Eve Power Co., Ltd., Jingmen, Hubei 448000 (CN)
(72) Inventor: CHENG, Qingshun, Jingmen, Hubei 448000 (CN); SU, Bin, Jingmen, Hubei 448000 (CN); GAO, Donglin, Jingmen, Hubei 448000 (CN); CHEN, Liquan, Jingmen, Hubei 448000 (CN); YUAN, Dingding, Jingmen, Hubei 448000 (CN)
(74) Representative: Herrero & Asociados, S.L.

(56) References cited:
- WO-A1-2019/035564
- CN-A- 117 501 465
- CN-A- 118 066 798
- CN-U- 216 459 890

## Description

### TECHNICAL FIELD

The present disclosure relates to the field of batteries, and in particular to a drying device and a method drying an electrode sheet.

### BACKGROUND

A drying device in the art usually takes hot air to dry an electrode sheet. However, a drying efficiency of taking the hot air for drying is low, demands of drying a thicker electrode sheet at a higher speed cannot be met. Therefore, in the related art, the drying device is arranged with an infrared drying assembly located above the electrode sheet to perform penetrative heating on the electrode sheet. However, in the art, the electrode sheet cannot be heated uniformly, such that the electrode sheet may have crimping and warping and is insufficiently dried, and in some cases, the electrode sheet may even be cracked or sticking to a roller.

WO2019035564A1 discloses an electrode heating device for drying an electrode. The device includes: a heating main body having a drying space through which an electrode passes; and a heating member for drying the moisture remaining on the electrode by directly heating the surface of the electrode passing through the drying space.

CN118066798A discloses an electrode sheet drying device in which an infrared heater is disposed on one side of an electrode sheet conveyed along a conveyance path, and a radiation temperature sensor is disposed on the other side of the electrode sheet. The temperature of the back surface of the electrode sheet corresponding to the back surface side closest to the surface portion of the electrode sheet of the infrared heater is measured by a radiation temperature sensor. The peak wavelength of the infrared rays irradiated to the surface of the electrode sheet by the infrared heater is not included in the detection wavelength range of the infrared rays detected by the radiation temperature sensor.

### SUMMARY

The present application disclose provides a drying device, so as to reduce a difference in thermal stresses applied to two sides of the electrode sheet. In this way, crimping, warping, insufficient drying and even cracking or sticking to the roller of the electrode sheet, caused by a large difference in the thermal stresses applied to the two sides of the electrode sheet, may be avoided.

In a first aspect, a drying device is provided and is configured to dry an electrode sheet. The drying device includes: a box body, a plurality of first infrared drying assemblies, and a plurality of second infrared drying assemblies. The box body defines a drying channel extending through the box body. The electrode sheet is capable of being conveyed in the drying channel; the drying channel has a first side and a second side opposite to the first side; the box body includes a first drying section arranged along a conveying direction of the electrode sheet. The plurality of first infrared drying assemblies are arranged on an inner wall of the first drying section and located on the first side of the drying channel. The plurality of second infrared drying assemblies are arranged on the inner wall of the first drying section and located on the second side of the drying channel. Each of the plurality of first infrared drying assemblies (20) comprises a first substrate (21) and a first heat generating layer (22) arranged on the first substrate (21). The first substrate (21) is arranged on the inner wall of the first drying section (11); the first heat generating layer (22) is arranged on a side of the first substrate (21) near the electrode sheet (200). The first heat generating layer (22) comprises at least one of: carbon black, micro-nano graphite powder, carbon nanofibers, carbon nanotubes and graphene. Each of the plurality of second infrared drying assemblies (30) comprises a second substrate (31) and a second heat generating layer (32) arranged on the second substrate (31). The second substrate (31) is arranged on the inner wall of the first drying section (11). The second heat generating layer (32) is arranged on a side of the second substrate (31) near the electrode sheet (200); the second heat generating layer (32) comprises at least one of: carbon black, micro-nano graphite powder, carbon nanofibers, carbon nanotubes and graphene.

In a second aspect, a method of drying an electrode sheet is provided and is performed by the drying device in the above aspect. The method includes: conveying a to-be-dried electrode sheet to the drying channel located in the first drying section; and drying two opposite sides of the electrode sheet respectively by the plurality of first infrared drying assemblies and the plurality of second infrared drying assemblies.

According to the present disclosure, a first infrared drying assembly and a second infrared drying assembly are arranged at a first drying section of a box body, and the first infrared drying assembly and the second infrared drying assembly are configured to emit infrared radiation. The first infrared drying assembly and the second infrared drying assembly are configured to dry the electrode sheet conveyed in a drying channel. In this way, a drying efficiency is greatly increased. Since the first infrared drying assembly is arranged on a first side of the drying channel and the second infrared drying assembly is arranged on a second side of the drying channel, both sides of the electrode sheet located in the drying channel can be heated by the infrared radiation. In this way, the difference in the thermal stresses applied to the two sides is small, such that crimping, warping, insufficient drying, and cracking or sticking to the roller of the electrode sheet, caused by a large difference in heating applied to the two sides of the electrode sheet, can be avoided.

### BRIEF DESCRIPTION OF THE DRAWINGS

FIG. 1 is a structural schematic view of a drying device according to some embodiments of the present disclosure.
FIG. 2 is a structural schematic view of a first infrared drying assembly shown in FIG. 1.
FIG. 3 is a structural schematic view of a second infrared drying assembly shown in FIG. 1.
FIG. 4 is an enlarged view of a portion A shown in FIG. 1.
FIG. 5 is a structural schematic view of a drying device according to some embodiments of the present disclosure.
FIG. 6 is a flow chart of a method of drying an electrode sheet according to some embodiments of the present disclosure.
FIG. 7 is a structural schematic view of the drying device used for performing the method shown in FIG. 6.

### Reference numerals in the drawings:

100, drying device; 200, electrode sheet;
10, box body; 20, first infrared drying assembly; 30, second infrared drying assembly; 40, third infrared drying assembly; 50, fourth infrared drying assembly; 60, pre-rolling-pressing assembly; 70, first control assembly; 80, second control assembly;
11, first drying section; 12, second drying section; 13, third drying section; 21, first substrate; 22, first heat generating layer; 31, second substrate; 32, second heat generating layer; 61, first roller; 62, second roller;
I, drying channel; I1, first side; I2, second side; P1, first face; P2, second face; F, air nozzle; X, conveying direction of the electrode sheet; Z, height direction of the box body.

### DETAILED DESCRIPTION

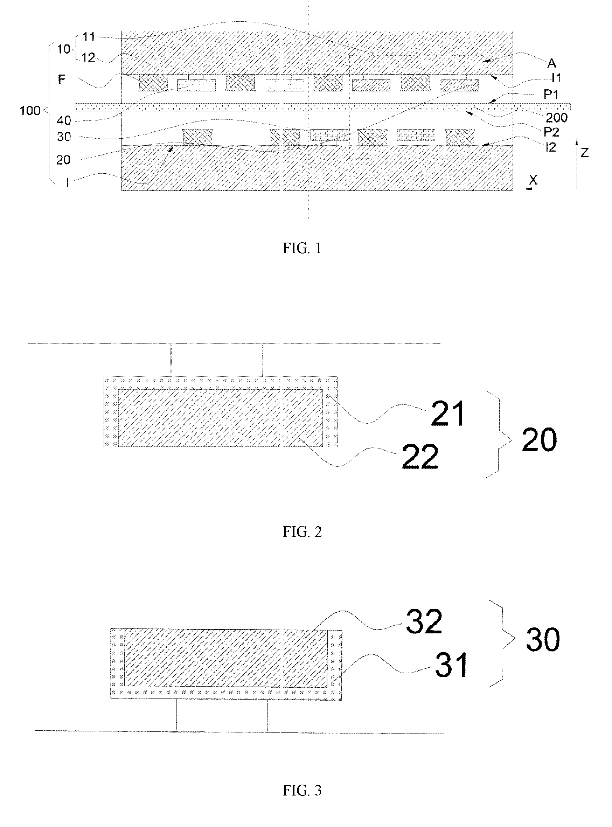

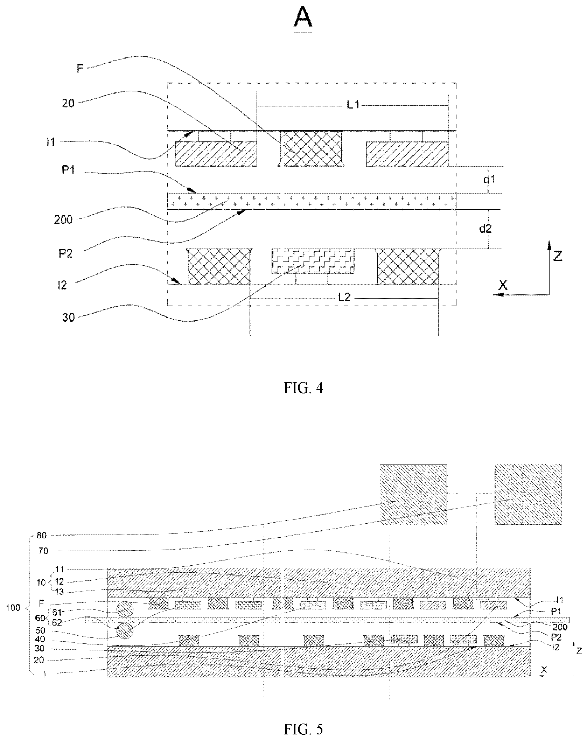

As shown in FIGS. 1 and 5, a drying device 100 provided by some embodiments will be described in the following. The drying device 100 provided by some embodiments is configured to dry an electrode sheet 200. The drying device 100 includes a box body 10, a plurality of first infrared drying assemblies 20, and a plurality of second infrared drying assemblies 30.

The box body 10 defines a drying channel I that extends through the box body 10. Qualified positive electrode paste or negative electrode paste is coated on a wide foil by a coating head to form an electrode sheet 200 in a primary form. The primary-form electrode sheet 200 is conveyed into the box body 10 to be dried. The primary-form electrode sheet 200 is conveyed into and conveyed along a drying channel I defined in the box body 10. The drying channel I has a first side I1 and a second side I2 opposite to the first side I1. In the present disclosure, the first side I1 of the drying channel I faces a first face P1 of the electrode sheet 200, and the second side I2 of the drying channel I faces a second face P2 of the electrode sheet 200. That is, the first side I1 and the second side I2 of the drying channel I are two sides disposed along a thickness direction of the electrode sheet 200.

The box body 10 includes a first drying section 11 disposed in a conveying direction X of the electrode sheet 200. The plurality of first infrared drying assemblies 20 are disposed on an inner wall of the first drying section 11 and are located on the first side I1 of the drying channel I. A heat generating surface of each of the plurality of first infrared drying assemblies 20 faces towards the first face P1 of the electrode sheet 200. The first infrared drying assembly 20 is an infrared radiation module. The first infrared drying assembly 20 emits electromagnetic waves having a wavelength in a range of 0.76µm -1000µm. That is, the first infrared drying assembly 20 emits infrared radiation to heat and dry the first face P1 of the electrode sheet 200. In some embodiments, the wavelength of the electromagnetic waves emitted from the first infrared drying assembly 20 may be 0.76 µm, 0.8 µm, 1 µm, 10 µm, 30 µm, 50 µm, 100 µm, 150 µm, 200 µm, 300 µm, 500 µm, 800 µm, or 1000 µm and so on. The plurality of second infrared drying assemblies 30 are arranged on the inner wall of the first drying section 11 and are located on the second side I2 of the drying channel I. A heat generating surface of each of the plurality of second infrared drying assemblies 30 faces towards the second face P2 of the electrode sheet 200. The second infrared drying assembly 30 is an infrared radiation module. The second infrared drying assembly 30 emits electromagnetic waves having a wavelength in a range of 0.76µm - 1000 µm. That is, the second infrared drying assembly 30 emits infrared radiation to heat and dry the second face P2 of the electrode sheet 200. In some embodiments, the wavelength of the electromagnetic waves emitted from the second infrared drying assembly 30 may be 0.76 µm, 0.8 µm, 1 µm, 10 µm, 30 µm, 50 µm, 100 µm, 150 µm, 200 µm, 300 µm, 500 µm, 800 µm, or 1,000 µm, and so on. It is noted that the wavelengths of the electromagnetic waves emitted from the first infrared drying assembly 20 and the second infrared drying assembly 30 are within a value range, instead of being a single fixed value.

Compared to the drying device in the art, for the drying device 100 in the present disclosure, the first infrared drying assemblies 20 and the second infrared drying assemblies 30 that emit infrared radiation are arranged at the first drying section 11 of the box body 10. The first infrared drying assemblies 20 and the second infrared drying assemblies 30 dry the electrode sheet 200 conveyed in the drying channel I, greatly increasing a drying efficiency. When a single stream of hot air is taken to dry the electrode sheet 200, it is an airflow that serves as a medium to conduct heat. The airflow needs to contact the electrode sheet 200, and circulation of the airflow is required, such that a heating efficiency and a drying efficiency are very low, and a drying speed is slow. In the present disclosure, infrared radiation is applied to dry the electrode sheet 200. Compared to taking the single stream of hot air to dry the electrode sheet 200, the infrared radiation achieves penetrative heating and is less dependent on air flowing, greatly improving the heating efficiency and the drying efficiency. In the present disclosure, since the first infrared drying assemblies 20 are arranged on the first side I1 of the drying channel I, and the second infrared drying assemblies 30 are arranged on the second side I2 of the drying channel I, two sides of the electrode sheet 200 disposed in the drying channel I can be heated by the infrared radiation. In this way, the difference in the thermal stresses applied to the two sides is small. Crimping, warping, drying, and other problems caused by the large difference in the heating on the two sides of the electrode sheet 200 can be avoided.

As shown in FIGS. 1, 2, and 4, in the present embodiment, the first infrared drying assembly 20 emits electromagnetic waves having a wavelength in a range of 2.5µm -25 µm, specifically the wavelength may be 2.5 µm, 3 µm, 5 µm, 8 µm, 10 µm, 11.1 µm, 12 µm, 13.6 µm, 15.5 µm, 20 µm, 22 µm, 23.5 µm, or 25 µm and so on. The second infrared drying assembly 30 emits electromagnetic waves having a wavelength in a range of 2.5µm -25 µm, specifically the wavelength may be 2.5 µm, 3 µm, 5 µm, 8 µm, 10 µm, 11.1 µm, 12 µm, 13.6 µm, 15.5 µm, 20 µm, 22 µm, 23.5 µm, or 25 µm, and so on. In the present disclosure, infrared absorption spectrums of the electrode paste are studied, and an optimal absorption wavelength range of the electrode paste is determined as being in a range of 1.5µm -20 µm. Therefore, each of the first infrared drying assembly 20 and the second infrared drying assembly 30 is configured to emit electromagnetic waves having the wavelength in the range of 2.5µm -25 µm. In this way, an efficiency of the electrode sheet 200 absorbing the infrared radiation is increased, an optimal heating and drying effect is achieved.

In the present embodiment, the drying channel I inside the box body 10 has an inlet and an outlet. The electrode sheet 200 enters the drying channel I through the inlet and is conveyed out of the drying channel I through the outlet.

The box body 10 further includes a second drying section 12. The first drying section 11 and the second drying section 12 are connected to each other and are arranged along the conveying direction X of the electrode sheet 200. That is, the first drying section 11 and the second drying section 12 are connected to each other sequentially, and the drying channel I extends from the first drying section 11 to the second drying section 12. The inlet of the drying channel I is located at an end of the first drying section 11, and the second drying section 12 is connected to the other end of the first drying section 11 away from the inlet. The electrode sheet 200 enters, through the inlet, the drying channel I located in the first drying section 11 and is subsequently conveyed to the drying channel I located in the second drying section 12. Furthermore, the electrode sheet 200 is conveyed out of the drying channel I through the outlet.

The drying device 100 further includes a plurality of third infrared drying assemblies 40. The plurality of third infrared drying assemblies 40 are disposed on an inner wall of the second drying section 12 and are located on the first side I1 of the drying channel I. A heat generating surface of each of the plurality of third infrared drying assemblies 40 faces towards the first face P1 of the electrode sheet 200. The third infrared drying assembly 40 is configured as an infrared radiation module. The third infrared drying assembly 40 emits electromagnetic waves having a wavelength in a range of 0.76µm -1000 µm. That is, the third infrared drying assembly 40 emits infrared radiation to heat and dry the electrode sheet 200. In some embodiments, the wavelength of the electromagnetic waves emitted from the third infrared drying assembly 40 may be 0.76 µm, 0.8 µm, 1 µm, 10 µm, 30 µm, 50 µm, 100 µm, 150 µm, 200 µm, 300 µm, 500 µm, 800 µm, or 1000 µm, and so on. In the present embodiment, the wavelength of the electromagnetic waves emitted from the third infrared drying assembly 40 is in a range of 2.5µm -25 µm, specifically the wavelength may be 2.5 µm, 3 µm, 5 µm, 8 µm, 10 µm, 11.1 µm, 12 µm, 13.6 µm, 15.5 µm, 20 µm, 22 µm, 23.5 µm, or 25 µm, and so on, such that an optimal heating and drying effect can be achieved.

In the present embodiment, the third infrared drying assemblies 40 arranged on only the first side I1 of the drying channel I located in the second drying section 12 of the box body 10, and the second side I2 of the drying channel I located in the second drying section 12 is not arranged with any infrared drying assembly. It is understood that the primary-form electrode sheet 200, which is formed by coating by the coating head, contains a relatively large amount of solvent, and the solvent needs to be evaporated by heating and drying. The entrance of the drying channel I is located at the end of the first drying section 11, and when the primary-form electrode sheet 200 enters the drying channel I located in the first drying section 11, both the first face P1 and the second face P2 of the electrode sheet 200 are subjected to the infrared radiation. In this way, the solvent in the electrode sheet 200 is heated to be evaporated more quickly, the two sides of the electrode sheet 200 are heated more uniformly, and the smaller difference in the thermal stresses applied to the two sides is achieved. As the electrode sheet 200 is dried within the first drying section 11, most of the free solvent in the electrode sheet 200 is volatilized, and a percentage of the solvent contained in the electrode sheet 200 is decreased. The electrode sheet 200 is conveyed from the first drying section 11 to the second drying section 12, and the electrode sheet 200 requires less heat to volatilize the solvent. Therefore, the third infrared drying assembly 40 is arranged on the first side I1 of the drying channel I located in the second drying section 12 of the box body 10, and the infrared drying assembly is omitted from the second side I2 of the drying channel I located in the second drying section 12. In this way, the infrared drying assemblies are saved, energy consumption and equipment costs are saved, and a probability of the electrode sheet 200 being broken and wrinkled due to being overbaked can be reduced.

As shown in FIG. 2, according to the present invention the first infrared drying assembly 20 includes a first substrate 21 and a first heat generating layer 22 arranged on the first substrate 21. The first heat generating layer 22 includes at least one of: carbon black, micro-nano graphite powder, carbon nanofibers, carbon nanotubes, and graphene. The first substrate 21 is arranged on the inner wall of the first drying section 11. The first heat generating layer 22 is disposed on a side of the first substrate 21 near the electrode sheet 200. The heat generating surface of the first infrared drying assembly 20 faces the first face P1 of the electrode sheet 200.

Structures of the second infrared drying assembly 30 and the third infrared drying assembly 40 are similar to that of the first infrared drying assembly 20, as shown in FIG. 3. The second infrared drying assembly 30 includes a second substrate 31 and a second heat generating layer 32 arranged on the second substrate 31. The second heat generating layer 32 includes at least one of: carbon black, micro-nano graphite powder, carbon nanofibers, carbon nanotubes, and graphene. The second substrate 31 is arranged on the inner wall of the first drying section 11, and the second heat generating layer 32 is arranged on a side of the second substrate 31 near the electrode sheet 200. The heat generating surface of the second infrared drying assembly 30 faces the second face P2 of the electrode sheet 200.

The first heat generating layer 22, the second heat generating layer 32, and a third heat generating layer of the third infrared drying assembly 40, after being supplied with power, generate heat to generate infrared radiation to dry the electrode sheet 200. The first infrared drying assembly 20 takes the first heat generating layer 22, which includes at least one of: carbon black, micro-nano graphite powder, carbon nanofibers, carbon nanotubes, and graphene, to emit infrared radiation having the wavelength in the range of 2.5µm -25 µm. The second infrared drying assembly 30 takes the second heat generating layer 32, which includes at least one of: carbon black, micro-nano-graphite powder, carbon nanofibers, carbon nanotubes, and graphene, to emit infrared radiation having the wavelength in the range of 2.5µm -25 µm. In the present embodiment, each of the first heat generating layer 22 and the second heat generating layer 32 includes the graphene. Each of the first infrared drying assembly 20 and the second infrared drying assembly 30 is a graphene infrared assembly. Similarly, the third infrared drying assembly 40 is a graphene infrared assembly.

An infrared lamp, which serves as an infrared radiation assembly, has an uneven heating temperature field, having an obvious temperature gradient. Therefore, the infrared lamp may dry the electrode sheet 200 unevenly, resulting in overbaking, brokage, wrinkles, and other phenomena, seriously affecting the quality of the electrode sheet 200. In addition, a center of the infrared lamp has a high temperature, and therefore, there is a risk of explosion. If a cooling element is further arranged in the drying device 100, costs may be increased, and a space in the box body 10 is further occupied. By contrast, the first infrared drying assembly 20, the second infrared drying assembly 30, and the third infrared drying assembly 40 of the present disclosure are graphene infrared assemblies. Compared to the infrared lamp, a temperature field generated by the graphene infrared assembly is more uniform, and therefore, the electrode sheet 200 can be heated more uniformly, and the electrode sheet 200 formed after drying is of better quality. Since the temperature field of the graphene infrared assembly is more uniform, a situation in which the center temperature is excessively high and a peripheral temperature is reduced may be avoided, such that the risk of explosion is reduced, and the drying efficiency is improved. Furthermore, the additional cooling element is omitted, and therefore, costs are reduced, and spaces are saved.

In the present embodiment, the plurality of first infrared drying assemblies 20 are spaced apart from each other and are arranged along the conveying direction X of the electrode sheet 200. A spacing L1 between two adjacent first infrared drying assemblies 20 is in a range of 50mm-800mm, as shown in FIG. 4. In some implementations, the L1 may be 50 mm, 60 mm, 70 mm, 80 mm, 90 mm, 100 mm, 120 mm, 150 mm, 160 mm, 180 mm, 200 mm, 250 mm, 300 mm, 400 mm, 500 mm, 600 mm, 700 mm, or 800 mm, and so on. In a height direction Z of the box body, a distance d1 from the first infrared drying assembly 20 to a conveying path of the electrode sheet 200 is in a range of 20mm-150 mm. In some embodiments, the d1 may be 20 mm, 30 mm, 40 mm, 50 mm, 60 mm, 80 mm, 100 mm, 120 mm, 130 mm, or 150 mm, and so on. It is to be noted that, a conveying roller (not shown in the drawings) is arranged at each of an inlet side and an outlet side of the drying channel I of the box body 10 and is configured to convey the to-be-dried electrode sheet 200. The conveying path of the electrode sheet 200 is a path formed by a line connecting the transfer roller on the inlet side to the roller on the outlet side.

It is understood that, since the first infrared drying assembly 20 has a high drying efficiency, the spacing between the adjacent first infrared drying assemblies 20 is reasonably set to be in a range of 50mm-800 mm, which saves costs. The electrode sheet 200 can be efficiently dried without arranging an excessively large number of first infrared drying assemblies 20, such that overbaking of the electrode sheet 200 is avoided, and quality of the electrode sheet 200 is ensured.

Similarly, the plurality of third infrared drying assemblies 40 are spaced apart from each other and are arranged along the conveying direction X of the electrode sheet 200. A spacing between two adjacent third infrared drying assemblies 40 is in a range of 50mm-800 mm. In some embodiments, the spacing between two adjacent third infrared drying assemblies 40 may be 50mm, 60mm, 70mm, 80mm, 90mm, 100mm, 120mm, 150mm, 160mm, 180mm, 200mm, 250mm, 300mm, 400mm, 500mm, 600mm, 700mm, or 800mm, and so on. In the height direction Z of the box body, a distance from the third infrared drying assembly 40 to the conveying path of the electrode sheet 200 is in a range of 20mm-150 mm. In some embodiments, the distance from the third infrared drying assembly 40 to the conveying path of the electrode sheet 200 may be 20mm, 30mm, 40mm, 50mm, 60mm, 80mm, 100mm, 120mm, 130mm or 150mm, and so on.

In some embodiments, the plurality of second infrared drying assemblies 30 are spaced apart from each other and are arranged along the conveying direction X of the electrode sheet 200. A spacing L2 between two adjacent second infrared drying assemblies 30 is greater than the spacing L1 between two adjacent first infrared drying assemblies 20. The spacing L2 between the two adjacent second infrared drying assemblies 30 is in a range of 100mm to 600 mm. In some embodiments, the L2 may be 100mm, 120mm, 150mm, 160mm, 180mm, 200mm, 250mm, 300mm, 400mm, 500mm, or 600mm, and so on, as long as the spacing L2 is greater than the spacing L1.

In some embodiments, the second infrared drying assembly 30 has a heat generating surface. In the height direction Z of the box body, the distance d2 from the heat generating surface of the second infrared drying assembly 30 to the electrode sheet 200 is greater than the distance d1 from the heat generating surface of the first infrared drying assembly 20 to the electrode sheet 200. The distance d2 from the heat generating surface of the second infrared drying assembly 30 to the electrode sheet 200 is in a range of 30mm-500 mm. In some embodiments, the distance d2 may be 30 mm, 40 mm, 50mm, 60mm, 80mm, 100mm, 120mm, 130mm, 150mm, 200mm, 300mm, 400mm, or 500mm, as long as the distance d2 is greater than the distance d1.

It is understood that, the coating head coats the first face P1 of the wide foil with the electrode paste to form the electrode sheet 200 in the primary form. The first face P1 of the electrode sheet 200 in the primary form is a paste layer containing the solvent and needs to be heated and dried. The second face P2 of the electrode sheet 200 in the primary form requires less heating. The first infrared drying assembly 20 faces the first face P1 of the electrode sheet 200. When the electrode sheet 200 in the primary form is conveyed into the drying channel I, the first infrared drying assembly 20 is the main module for drying, and the second infrared drying assembly 30 is an auxiliary drying module. In the present disclosure, the spacing L2 between two adjacent second infrared drying assemblies 30 is greater than the spacing L1 between two adjacent first infrared drying assemblies 20; and/or the distance d2 from the second infrared drying assembly 30 to the conveying path of the electrode sheet 200 is greater than the distance d1 from the first infrared drying assembly 20 to the conveying path of the electrode sheet 200. In this way, a baking temperature that is applied by the second infrared drying assembly to the second face P2 of the electrode sheet 200 is reduced, preventing the electrode sheet 200 from being broken or having wrinkles caused by overbaking. In addition, a heat difference between the first face P1 and the second face P2 of the electrode sheet 200 is reduced, the difference in the heat stresses applied to the two sides of the electrode sheet 200 is reduced, and the electrode sheet 200 is prevented from crimping, warping, or cracking.

In the present embodiment, the spacing L2 is equal to the spacing L1, and the distance d2 is greater than the distance d1. In other embodiments, the spacing L2 may be greater than the spacing L1, and the distance d2 is greater than the distance d1; or the spacing L2 is greater than the spacing L1, and the distance d2 is equal to the distance d1.

In some embodiments, the drying device 100 further includes a plurality of hot steam drying assemblies. Air nozzles F of each hot steam drying assemblies are arranged on the inner wall of the first drying section 11 and the inner wall of the second drying section 12. The air nozzles F are configured to input hot steams into the box body 10. The hot steam drying assemblies are arranged at the first side I1 and/or the second side I2 of the drying channel I.

In the present embodiment, within the first drying section 11, the air nozzles F and the first infrared drying assemblies 20 located at the first side I1 of the drying channel I are distributed alternately; and the air nozzles F and the second infrared drying assemblies 30 located at the second side I2 of the drying channel I are distributed alternately, as shown in FIG. 1.

It is noted that the first drying section 11 includes n sub-boxes that are connected to each other. The n may be an integer greater than or equal to 2, such as 2, 3, 4, 5, 6, 7, 8, 10 and so on. In some embodiments, the total number of first infrared drying assemblies 20 and second infrared drying assemblies 30 arranged in each of the n sub-boxes is 4 to 10. Specifically, two first infrared drying assemblies 20 and two second infrared drying assemblies 30 are arranged; or five first infrared drying assemblies 20 and five second infrared drying assemblies 30 are arranged; three first infrared drying assemblies 20 and three second infrared drying assemblies 30 are arranged; or four first infrared drying assemblies 20 and four second infrared drying assemblies 30 are arranged. Four air nozzles F, two first infrared drying assemblies 20, and two second infrared drying assemblies 30 are arranged in the first drying section 11. Two air nozzles F are arranged on the first side I1 of the drying channel I. The two air nozzles F and the two first infrared drying assemblies 20 are arranged alternately. Two air nozzles F are arranged at the second side I2 of the drying channel I, and the two air nozzles F and the two second infrared drying assemblies 30 are arranged alternately.

The second drying section 12 includes m sub-boxes that are connected to each other. The m may be 2, 3, 4, 5, 6, 7, 8, 10, 12, 14, 16, 20 and so on. Specifically, four air nozzles F and two third infrared drying assemblies 40 are arranged in the second drying section 12. Two air nozzles F are arranged at the first side I1 of the drying channel I, and the two air nozzles F and the two third infrared drying assemblies 40 are arranged alternately. Only two air nozzles F are arranged at the second side I2 of the drying channel I.

In other embodiments, two first infrared drying assemblies 20, one air nozzle F, two first infrared drying assemblies 20 are sequentially arranged; alternatively, two air nozzles F, one first infrared drying assembly 20, and two air nozzles F are sequentially arranged. The arrangement is not limited herein.

In the present embodiment, the m is a number between n and 2n. Within the first drying section 11, i.e., inside the first to the n-th sub-boxes, the amount of solvent contained in the electrode sheet 200 is relatively large, and therefore, the infrared drying assemblies need to be arranged on both the first side I1 and the second side I2 of the drying channel I. Within the second drying section 12, i.e., inside the (n+1)th to the (n+m)th sub-boxes, the amount of solvent contained in the electrode sheet 200 is relatively small.

The air returning ports (not shown) of the hot stream drying assemblies are arranged on the inner wall of the box body 10. In some embodiments, the number of the air returning ports nozzles is 1, 2 or more. In some embodiments, the air returning ports are arranged in the first drying section 11 and/or the second drying section 12, as long as the air returning ports of the hot steam drying assemblies and the air nozzles F can cooperatively form circulation of hot streams.

The hot steam drying assemblies are configured to take hot streams to dry the electrode sheet 200, and the circulation of an airflow of the hot steams takes away the solvent evaporated from the electrode sheet 200.

In some embodiments, each of the first infrared drying assembly 20, the second infrared drying assembly 30, and the third infrared drying assembly 40 can be set to generate a standard first-stage temperature and a second-stage temperature. The first-stage temperature is in a range of 180°C-280°C, and in some embodiments, the first-stage temperature may be 180°C, 190°C, 200°C, 210°C, 220°C, 230°C, 250°C, or 280°C, and so on. The second-stage temperature is in a range of 100°C-200°C, and in some embodiments, the second-stage temperature may be 100°C, 120°C, 140°C, 160°C, 180°C, or 200°C, and so on. A rating power corresponding to the first-stage temperature is in a range of 70%-100%. A rating power corresponding to the second-stage temperature is in a range of 50%-80%.

From the inlet to the outlet of the drying channel I, the first drying section 11 has the first sub-box, the second sub-box, the third sub-box, ..., and the n-th sub-box; and the second drying section 12 has the (n+1)th sub-box, ..., and the (n+m)th sub-box.

The third infrared drying assemblies 40, which are arranged in the [(n+m)/4]-th sub-box to the [(n+m)/2]-th sub-box and are located near the outlet of the drying channel I, are set to generate the standard second-stage temperature. The first infrared drying assemblies 20 and the third infrared drying assemblies 40 other than the above third infrared drying assemblies 40 are set to generate the standard first-stage temperature. Alternatively, the first infrared drying assemblies 20 and the third infrared drying assemblies 40 that are arranged in a middle portion are set to generate the standard second-stage temperature, and the rest first infrared drying assemblies 20 and the third infrared drying assemblies 40 are set to generate the standard first-stage temperature. The drying assemblies arranged in the [(n+m)/4]-th sub-box to the [(n+m)/2]-th sub-boxes are set to generate the standard second-stage temperature.

The second infrared drying assemblies 30 arranged within the first drying section 11 all are set to generate the standard first-stage temperature. That is, the second infrared drying assemblies 30 arranged within the first sub-box to the n-th sub-box are all set to generate the standard first-stage temperature. Alternatively, along the conveying direction X of the electrode sheet 200, the second infrared drying assemblies 30 arranged within the first sub-box to the (n/2)-th sub-box are set to generate the standard first-stage temperature; and the second infrared drying assemblies 30 arranged within the (n/2)-th sub-box to the n-th sub-box are set to generate the standard second-stage temperature.

In some embodiments, the drying device 100 further includes a bi-directional unwinding mechanism and a bi-directional take-up mechanism (not shown). The bi-directional unwinding mechanism includes an unwinding guide shaft and an unwinding reel. The bi-directional take-up mechanism includes a take-up guide shaft and a take-up reel. The bi-directional unwinding mechanism is configured to unwind the electrode sheet 200. The bi-directional take-up mechanism is configured to take up and wind the electrode sheet 200. The bi-directional unwinding mechanism is arranged at an upstream of the box body 10, and the bi-directional take-up mechanism is arranged at a downstream of the box body 10. The electrode sheet 200 is conveyed, by the bi-directional unwinding mechanism, into the box body 10, and after drying, the electrode sheet 200 is conveyed out of the drying channel I and wound up by the bi-directional take-up mechanism.

As shown in FIG. 5, FIG. 5 is a structural schematic view of the drying device according to some embodiments of the present disclosure. A structure of the drying device in the present embodiment is substantially the same as that of the drying device shown in the embodiment of FIG. 1. In the present embodiment, a specific structure of the box body 10 of the present embodiment is different from that in the embodiment shown in FIG. 1, and the drying device 100 in the present embodiment further includes a pre-rolling-pressing assembly 60.

In the present embodiment, the box body 10 further includes a third drying section 13. The first drying section 11, the second drying section 12 and the third drying section 13 are connected to each other and are arranged along the conveying direction X of the electrode sheet 200. That is, the first drying section 11, the second drying section 12 and the third drying section 13 are connected to each other sequentially, and the drying channel I extends from the first drying section 11 and the second drying section 12 to the third drying section 13. The inlet of the drying channel I is located at an end of the first drying section 11, the second drying section 12 is connected to the other end of the first drying section 11 away from the inlet, and the third drying section 13 is connected to an end of the second drying section 12 away from the first drying section 11. The outlet of the drying channel I is located at an end of the third drying section 13 away from the second drying section 12. The electrode sheet 200 enters the drying channel I in the first drying section 11 through the inlet. The electrode sheet 200 is then conveyed to the drying channel I in the second drying section 12 and the third drying section 13 sequentially, and is then conveyed out of the drying channel I through the outlet.

The drying device 100 further includes a plurality of fourth infrared drying assemblies 50 and a pre-rolling-pressing assembly 60. The plurality of the fourth infrared drying assemblies 50 and the pre-rolling-pressing assembly 60 are arranged on an inner wall of the third drying section 13. The pre-rolling-pressing assembly 60 is arranged in the third drying section 13 at a position near the outlet. The fourth infrared drying assembly 50 is located on a side of the pre-rolling-pressing assembly 60 away from the outlet. That is, the fourth infrared drying assembly 50 is located at a portion of the third drying section 13 near the second drying section 12, as shown in FIG. 5.

The fourth drying section is located on the first side I1 of the drying channel I within the third drying section 13. The fourth infrared drying assembly 50 is an infrared radiation module. The fourth infrared drying assembly 50 emits electromagnetic waves having a wavelength in a range of 0.76µm -1000 µm. In some embodiments, the fourth infrared drying assembly 50 emits electromagnetic waves having a wavelength of 0.76 µm, 0.8 µm, 1 µm, 10 µm, 30 µm, 50 µm, 100 µm, 150 µm, 200 µm, 300 µm, 500 µm, 800 µm m or 1000 µm, and so on. In the present embodiment, the wavelength of the electromagnetic waves emitted from the fourth infrared drying assembly 50 is in a range of 2.5µm -25 µm, specifically the wavelength may be 2.5 µm, 3 µm, 5 µm, 8 µm, 10 µm, 11.1 µm, 12 µm, 13.6 µm, 15.5 µm, 20 µm, 22 µm, 23.5 µm, or 25 µm, and so on, such that an optimal heating and drying effect is achieved.

The pre-rolling-pressing assembly 60 includes a first roller 61 and a second roller 62 opposite to the first roller 61. The first roller 61 is arranged on the first side I1 of the drying channel I, and the second roller 62 is arranged on the second side I2 of the third drying section I. A gap is defined between the first roller 61 and the second roller 62. The electrode sheet 200 that has been dried in the first drying section 11 and the second drying section 12 is conveyed to the drying channel I in the third drying section 13. The electrode sheet 200 extends through the gap between the first roller 61 and the second roller 62 and is rolled by the first roller 61 and the second roller 62. After the electrode sheet 200 is dried by the first infrared drying assembly 20, the second infrared drying assembly 30, the third infrared drying assembly 40, and the fourth infrared drying assembly 50, a temperature of the electrode sheet 200 is still high. At this moment, the electrode sheet 200 is pre-rolled and pressed by the pre-rolling-pressing assembly 60 that is arranged in the box body 10 and is located between the fourth infrared drying assembly 50 and the outlet. In this way, the electrode sheet 200 is pressed to be compacted, and processing performance is improved. After the electrode sheet 200 is pre-rolled and pressed, a probability of the electrode sheet 200 bouncing back in subsequent rolling processes can be reduced, such that a pressure applied to the rollers at subsequent processes may be reduced. Moreover, after the electrode sheet 200 is pre-rolled and pressed, a frequency of the coating being broken can be reduced, a standard of an edge of the coated electrode sheet 200 can be broadened, and a defective rate of the electrode sheet 200 can be reduced.

In the present embodiment, a second power of the second infrared drying assembly 30 emitting the electromagnetic waves is lower than a first power of the first infrared drying assembly 20 emitting the electromagnetic waves.

Specifically, the first infrared drying assembly 20 increases an ambient temperature of an upper side of the electrode sheet 200 to a first temperature T1. The second infrared drying assembly 30 increases an ambient temperature of a lower side of the electrode sheet 200 to a second temperature T2. Since the second power of the second infrared drying assembly 30 emitting the electromagnetic waves is lower than the first power of the first infrared drying assembly 20 emitting the electromagnetic waves, the second temperature T2 is lower than the first temperature T1. In some embodiments, the second power is 5% to 60% lower than the first power. The second power may be 5%, 8%, 10%, 12%, 15%, 18%, 20%, 25%, 30%, 35%, 40%, 45%, 50%, 55%, or 60% lower than the first power. In some embodiments, the second temperature T2 is 5% to 60% lower than the first temperature T1. The second temperature T2 may be 5%, 8%, 10%, 12%, 15%, 18%, 20%, 25%, 30%, 35%, 40%, 45%, 50%, 55%, or 60%, and so on, lower than the first temperature T1.

Since the demand of heating the second face P2 of the electrode sheet 200 in the primary form is less, the second infrared drying assembly 30 having the lower power is arranged to heat the ambient temperature of the lower side of the electrode sheet 200 to the lower second temperature T2. In this way, the electrode sheet 200 is prevented from being broken or having wrinkles caused by overbaking. In addition, the difference in heating applied on the first face P1 and the second face P2 of the electrode sheet 200 is reduced, such that the electrode sheet 200 is prevented from crimping, warping or cracking.

It should be noted that both the first infrared drying assembly 20 and the second infrared drying assembly 30 may be set to generate the first temperature. In the present embodiment, the first temperature T1 of the first infrared drying assembly 20 is the standard first-stage temperature, and the second temperature T2 of the second infrared drying assembly 30 is 5% to 60% lower than the standard first-stage temperature. In some embodiments, the first infrared drying assembly 20 is set to generate the first-stage temperature, and the second infrared drying assembly 30 is set to generate the second-stage temperature. The first temperature T1 of the first infrared drying assembly 20 is the standard first-stage temperature. The second temperature T2 of the second infrared drying assembly 30 is 5% to 60% lower than the standard second-stage temperature.

In some embodiments, since the first infrared drying assembly 20 and the second infrared drying assembly 30 have different rating powers, the power of the second infrared drying assembly 30 emitting the electromagnetic waves is lower than the power of the first infrared drying assembly 20 emitting the electromagnetic waves. Alternatively, in other embodiments, the drying device 100 is arranged with a power distributor or a control assembly to distribute/control the power of the first infrared drying assembly 20 emitting the electromagnetic waves to be equal to or different from the power of the second infrared drying assembly 30 emitting the electromagnetic waves.

In the present embodiment, the drying device 100 further includes a first control assembly 70 and a second control assembly 80. The first control assembly 70 is electrically connected to the first infrared drying assembly 20. The first control assembly 70 is configured to control the first power of the first infrared drying assembly 20 emitting the electromagnetic waves, enabling the first infrared drying assembly 20 to increase the ambient temperature on the upper side of the electrode sheet 200 to the first temperature T1. The second control assembly 80 is electrically connected to the second infrared drying assembly 30. The second control assembly 80 is configured to control the second power of the second infrared drying assembly 30 emitting the electromagnetic waves, enabling the second infrared drying assembly 30 to increase the ambient temperature of the lower side of the electrode sheet 200 to the second temperature T2. The second power is lower than the first power, such that the second temperature T2 is lower than the first temperature T1.

In some embodiments, the drying device 100 further includes a third control assembly, a fourth control assembly, and a plurality of temperature sensors. The first control assembly 70 is electrically connected to the first infrared drying assembly 20. The second control assembly 80 is electrically connected to the second infrared drying assembly 30. The third control assembly is electrically connected to the third infrared drying assembly 40. The fourth control assembly is electrically connected to the fourth infrared drying assembly 50. In this way, the infrared drying assemblies are independently controlled. Each of the first control assembly 70, the second control assembly 80, the third control assembly and the fourth control assembly is an independent electrical control cabinet. The temperature sensors are arranged at corresponding drying assemblies to receive corresponding temperature signals.

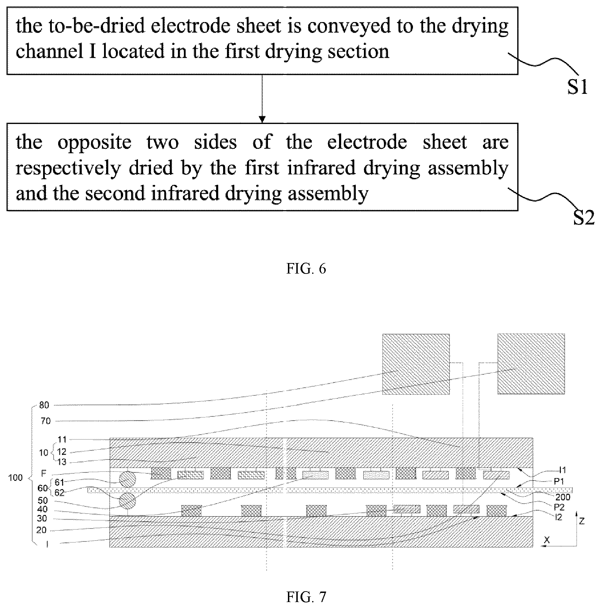

As shown in FIGS. 6 and 7, embodiments further provide a method of drying the electrode sheet 200, and the method is performed by the drying device 100 of the embodiments of the present disclosure. The method of drying the electrode sheet 200 includes following steps.

At step S1, the to-be-dried electrode sheet 200 is conveyed to the drying channel I located in the first drying section 11.

At step S2, the opposite two sides of the electrode sheet 200 are respectively dried by the first infrared drying assembly 20 and the second infrared drying assembly 30.

In the present embodiment, the electrode sheet 200 is dried by the drying device 100 as shown in FIG. 7. The method of drying the electrode sheet 200 will be described in detail below.

At the step S1, the to-be-dried electrode sheet 200 is conveyed to the drying channel I located in the first drying section 11.

In some embodiments, in the step S1, the to-be-dried electrode sheet 200 is conveyed to the drying channel I of the first drying section 11 by the bi-directional unwinding mechanism.

At the step S2, the opposite two sides of the electrode sheet 200 are dried respectively by the first infrared drying assembly 20 and the second infrared drying assembly 30.

In the present embodiment, the first side I1 and the second side I2 of the drying channel I are two sides along the thickness direction of the electrode sheet 200. The first infrared drying assembly 20 emits infrared radiation to heat and dry the first face P1 of the electrode sheet 200. The first infrared drying assembly emits electromagnetic waves having the wavelength in the range of 0.76µm -1000 µm. In some embodiments, the first infrared drying assembly 20 emits electromagnetic waves having the wavelength of 0.76 µm, 0.8 µm, 1 µm, 10 µm, 30 µm, 50 µm, 100 µm, 150 µm, 200 µm, 300 µm, 500 µm, 800 µm, or 1,000 µm, and so on. The second infrared drying assembly 30 emits electromagnetic waves having the wavelength in the range of 0.76µm -1000 µm. The second infrared drying assembly 30 emits infrared radiation to heat and dry the second face P2 of the electrode sheet 200. In some embodiments, the second infrared drying assembly 30 emits electromagnetic waves having the wavelength of 0.76 µm, 0.8 µm, 1 µm, 10 µm, 30 µm, 50 µm, 100 µm, 150 µm, 200 µm, 300 µm, 500 µm, 800 µm, or 1,000 µm, and so on.

The distance from the first infrared drying assembly 20 to the electrode sheet 200 is in the range of 20mm-150 mm, and the distance from the second infrared drying assembly 30 to the electrode sheet 200 is greater than the distance from the first infrared drying assembly 20 to the electrode sheet 200.

According to the method of drying the electrode sheet 200 provided in the present embodiment, since the first infrared drying assembly 20 is arranged at the first side I1 of the drying channel I and the second infrared drying assembly 30 is arranged at the second side I2 of the drying channel I, both sides of the electrode sheet 200 arranged in the drying channel I can be heated by the infrared radiation. Therefore, the difference in the thermal stresses applied to the two sides of the electrode sheet is smaller. The the electrode sheet 200 crimping, warping, insufficient drying, or even cracking or sticking to the rollers, which are caused by a large difference in the heat applied to the two sides of the electrode sheet 200, can be avoided.

In some embodiments, the following steps may be performed before the step S1.

At step R1, electrode materials are used to form an electrode paste.

Specifically, the electrode materials may be a positive electrode material or a negative electrode material. In some embodiments, the positive electrode material includes at least one of: lithium iron phosphate, lithium manganate, lithium manganese iron phosphate, lithium nickel manganate, lithium nickel cobalt manganate, and lithium-rich manganese base. The negative electrode material includes at least one of: graphite, silicon carbon, silicon oxygen, lithium titanium salt, lithium niobium salt.

At step R2, the electrode paste is added to a coating device and is coated on a wide foil material by a coating head to form the electrode sheet 200 in the primary form.

The electrode sheet 200 in the primary form is to be dried. That is, after the steps R1-R2, the steps S1-S2 are performed.

In some embodiments, after the step S2, the following steps may also be performed.

At step S3, the electrode sheet 200 is conveyed from the first drying section 11 to the drying channel I located within the second drying section 12

At step S4, the electrode sheet 200 is dried by the third infrared drying assembly 40.

At step S5, the electrode sheet 200 is conveyed from the second drying section 12 to the drying channel I located within the third drying section 13.

At step S6, the electrode sheet 200 is dried by the fourth infrared drying assembly 50.

At step S7, the electrode sheet 200 is further conveyed out of the drying channel I.

In some embodiments, in the step S7, the electrode sheet 200 is conveyed out of the drying channel I to be wound up by the bi-directional take-up mechanism.

The above is a description of the embodiments of the present disclosure.

According to the present disclosure, the first infrared drying assembly and the second infrared drying assembly are arranged at the first drying section of the box body, and the first infrared drying assembly and the second infrared drying assembly are configured to emit infrared radiation. The first infrared drying assembly and the second infrared drying assembly are configured to dry the electrode sheet conveyed in the drying channel. In this way, the drying efficiency is greatly increased. Since the first infrared drying assembly is arranged on the first side of the drying channel and the second infrared drying assembly is arranged on the second side of the drying channel, both sides of the electrode sheet located in the drying channel can be heated by the infrared radiation. In this way, the difference in the thermal stresses applied to the two sides is small, such that crimping, warping, insufficient drying, and cracking or sticking to the roller of the electrode sheet, caused by a large difference in heating applied to the two sides of the electrode sheet, can be avoided. The present disclosure further provides the method of drying the electrode sheet. By following the method, the electrode sheet having crimping, warping, insufficient drying, and cracking or sticking to the roller, which are caused by the large difference in heating applied to the two sides of the electrode sheet, can be avoided.

## Claims

1. A drying device, configured to dry an electrode sheet (200), the drying device comprising:
a box body (10), defining a drying channel (I) extending through the box body (10); wherein the electrode sheet (200) is capable of being conveyed in the drying channel (I); the drying channel (I) has a first side (I1) and a second side (I2) opposite to the first side (I1); the box body (10) comprises a first drying section (11) arranged along a conveying direction of the electrode sheet (200);
a plurality of first infrared drying assemblies (20), arranged on an inner wall of the first drying section (11) and located on the first side (I1) of the drying channel (I); and
a plurality of second infrared drying assemblies (30), arranged on the inner wall of the first drying section (11) and located on the second side (I2) of the drying channel (I);
**characterized in that**,
each of the plurality of first infrared drying assemblies (20) comprises a first substrate (21) and a first heat generating layer (22) arranged on the first substrate (21); wherein the first substrate (21) is arranged on the inner wall of the first drying section (11); the first heat generating layer (22) is arranged on a side of the first substrate (21) near the electrode sheet (200); the first heat generating layer (22) comprises at least one of: carbon black, micro-nano graphite powder, carbon nanofibers, carbon nanotubes and graphene;
each of the plurality of second infrared drying assemblies (30) comprises a second substrate (31) and a second heat generating layer (32) arranged on the second substrate (31); wherein the second substrate (31) is arranged on the inner wall of the first drying section (11); the second heat generating layer (32) is arranged on a side of the second substrate (31) near the electrode sheet (200); the second heat generating layer (32) comprises at least one of: carbon black, micro-nano graphite powder, carbon nanofibers, carbon nanotubes and graphene.

2. The drying device according to claim 1, wherein, the box body (10) further comprises a second drying section (12); the first drying section (11) and the second drying section (12) are connected to each other and are arranged along the conveying direction of the electrode sheet (200); and
the drying device further comprises a plurality of third infrared drying assemblies, the third infrared drying assemblies are arranged on the inner wall of the second drying section (12) and are located on the first side (I1) of the drying channel (I).

3. The drying device according to claim 2, wherein, the box body (10) further comprises a third drying section (13), the third drying section (13) is connected to an end of the second drying section (12) away from the first drying section (11); and
the drying device further comprises a pre-rolling-pressing assembly (60); the pre-rolling-pressing assembly (60) is arranged on an inner wall of the third drying section (13) the pre-rolling-pressing assembly (60) comprises a first roller (61) and a second roller (62) opposite to the first roller (61); the first roller (61) is located on the first side (I1) of the drying channel (I); the second roller (62) is located on the second side (I2) of the drying channel (I); a gap is defined between the first roller (61) and the second roller (62).

4. The drying device according to claim 2, wherein, each of a wavelength of electromagnetic waves emitted from the plurality of first infrared drying assemblies (20), a wavelength of electromagnetic waves emitted from the plurality of second infrared drying assemblies (30), and a wavelength of electromagnetic waves emitted from the plurality of third infrared drying assemblies is in a range of 2.5µm -25µm.

5. The drying device according to claim 2, wherein, the plurality of first infrared drying assemblies (20) are spaced apart from each other and are arranged along the conveying direction of the electrode sheet (200); a spacing (L1) between every two adjacent first infrared drying assemblies (20) of the plurality of first infrared drying assemblies (20) is in a range of 50mm-800 mm; and
a distance (d1) from each of the plurality of first infrared drying assemblies (20) to a conveying path of the electrode sheet (200) is in a range of 20mm-150 mm.

6. The drying device according to claim 5, wherein the plurality of second infrared drying assemblies (30) are spaced apart from each other and are arranged along the conveying direction of the electrode sheet (200); a spacing (L2) between every two adjacent second infrared drying assemblies (30) of the plurality of second infrared drying assemblies (30) is greater than the spacing between the two adjacent first infrared drying assemblies (20); and/or
a distance (d2) from each of the plurality of second infrared drying assemblies (30) to the conveying path of the electrode sheet (200) is greater than the distance from the first infrared drying assembly (20) to the conveying path of the electrode sheet (200).

7. The drying device according to claim 6, wherein, the distance (d1) from the first infrared drying assembly (20) to the electrode sheet (200) is in the range of 20 mm-150 mm, and the distance from the second infrared drying assembly (30) to the electrode sheet (200) is greater than the distance from the first infrared drying assembly (20) to the electrode sheet (200).

8. The drying device according to claim 1, wherein, a power of each of the second infrared drying assemblies (30) emitting electromagnetic waves is lower than a power of each of the plurality of first infrared drying assemblies (20) emitting electromagnetic waves.

9. The drying device according to claim 8, wherein, the power of each of the second infrared drying assemblies (30) emitting electromagnetic waves is 5% to 60% lower than the power of each of the plurality of first infrared drying assemblies (20) emitting electromagnetic waves.

10. The drying device according to claim 1, wherein,
the plurality of first infrared drying assemblies (20) are configured to increase an ambient temperature of a side above a first face of the electrode sheet (200) to a first temperature;
the plurality of second infrared drying assemblies (30) are configured to increase an ambient temperature of a side below a second face of the electrode sheet (200) to a second temperature.

11. The drying device according to claim 10, wherein, the second temperature is 5% to 60% lower than the first temperature.

12. A method of drying an electrode sheet, performed by the drying device according to any one of claims 1-11, the method is comprising following steps:
conveying (S1) a to-be-dried electrode sheet to the drying channel located in the first drying section; and
drying (S2) two opposite sides of the electrode sheet respectively by the plurality of first infrared drying assemblies and the plurality of second infrared drying assemblies.

## Patentansprüche

1. Eine Trocknungsvorrichtung, konfiguriert zum Trocknen einer Elektrodenfolie (200), wobei die Trocknungsvorrichtung umfasst:
einen Kastenkörper (10), der einen durch den Kastenkörper (10) hindurch verlaufenden Trocknungskanal (I) definiert;
wobei die Elektrodenfolie (200) in dem Trocknungskanal (I) förderbar ist;
wobei der Trocknungskanal (I) eine erste Seite (11) und eine der ersten Seite (11) gegenüberliegende zweite Seite (I2) aufweist;
wobei der Kastenkörper (10) einen ersten Trocknungsabschnitt (11) umfasst, der entlang einer Förderrichtung der Elektrodenfolie (200) angeordnet ist;
eine Vielzahl von ersten Infrarot-Trocknungseinheiten (20), die an einer Innenwand des ersten Trocknungsabschnitts (11) angeordnet sind und sich auf der ersten Seite (11) des Trocknungskanals (I) befinden; und
eine Vielzahl von zweiten Infrarot-Trocknungseinheiten (30), die an der Innenwand des ersten Trocknungsabschnitts (11) angeordnet sind und sich auf der zweiten Seite (I2) des Trocknungskanals (I) befinden;
**dadurch gekennzeichnet, dass**
jede der Vielzahl von ersten Infrarot-Trocknungseinheiten (20) ein erstes Substrat (21) und eine auf dem ersten Substrat (21) angeordnete erste Wärmeerzeugungsschicht (22) umfasst;
wobei das erste Substrat (21) an der Innenwand des ersten Trocknungsabschnitts (11) angeordnet ist;
wobei die erste Wärmeerzeugungsschicht (22) auf einer der Elektrodenfolie (200) nahen Seite des ersten Substrats (21) angeordnet ist;
wobei die erste Wärmeerzeugungsschicht (22) mindestens eines von Folgendem umfasst: Ruß, Mikro-Nanographitpulver, Kohlenstoffnanofasern, Kohlenstoffnanoröhren und Graphen;
wobei jede der Vielzahl von zweiten Infrarot-Trocknungseinheiten (30) ein zweites Substrat (31) und eine auf dem zweiten Substrat (31) angeordnete zweite Wärmeerzeugungsschicht (32) umfasst;
wobei das zweite Substrat (31) an der Innenwand des ersten Trocknungsabschnitts (11) angeordnet ist;
wobei die zweite Wärmeerzeugungsschicht (32) auf einer der Elektrodenfolie (200) nahen Seite des zweiten Substrats (31) angeordnet ist;
wobei die zweite Wärmeerzeugungsschicht (32) mindestens eines von Folgendem umfasst: Ruß, Mikro-Nanographitpulver, Kohlenstoffnanofasern, Kohlenstoffnanoröhren und Graphen.

2. Die Trocknungsvorrichtung gemäß Anspruch 1, wobei
der Kastenkörper (10) ferner einen zweiten Trocknungsabschnitt (12) umfasst;
wobei der erste Trocknungsabschnitt (11) und der zweite Trocknungsabschnitt (12) miteinander verbunden sind und entlang der Förderrichtung der Elektrodenfolie (200) angeordnet sind; und
wobei die Trocknungsvorrichtung ferner eine Vielzahl von dritten Infrarot-Trocknungseinheiten umfasst, wobei die dritten Infrarot-Trocknungseinheiten an der Innenwand des zweiten Trocknungsabschnitts (12) angeordnet sind und sich auf der ersten Seite (11) des Trocknungskanals (I) befinden.

3. Die Trocknungsvorrichtung gemäß Anspruch 2, wobei
der Kastenkörper (10) ferner einen dritten Trocknungsabschnitt (13) umfasst, wobei der dritte Trocknungsabschnitt (13) an einem Ende des zweiten Trocknungsabschnitts (12), das vom ersten Trocknungsabschnitt (I1) entfernt ist, verbunden ist; und
die Trocknungsvorrichtung ferner eine Pre-Rollpress-Anordnung (60) umfasst; wobei die Pre-Rollpress-Anordnung (60) an einer Innenwand des dritten Trocknungsabschnitts (13) angeordnet ist, und die Pre-Rollpress-Anordnung (60) einen ersten Walze (61) und eine zweite Walze (62), die der ersten Walze (61) gegenüberliegt, umfasst;
wobei die erste Walze (61) sich auf der ersten Seite (11) des Trocknungskanals (I) befindet;
wobei die zweite Walze (62) sich auf der zweiten Seite (I2) des Trocknungskanals (I) befindet;
wobei ein Spalt zwischen der ersten Walze (61) und der zweiten Walze (62) definiert ist.

4. Die Trocknungsvorrichtung gemäß Anspruch 2, wobei jede Wellenlänge der von der Vielzahl der ersten Infrarot-Trocknungseinheiten (20) ausgesendeten elektromagnetischen Wellen, jede Wellenlänge der von der Vielzahl der zweiten Infrarot-Trocknungseinheiten (30) ausgesendeten elektromagnetischen Wellen und jede Wellenlänge der von der Vielzahl der dritten Infrarot-Trocknungseinheiten ausgesendeten elektromagnetischen Wellen im Bereich von 2,5 µm bis 25 µm liegt.

5. Die Trocknungsvorrichtung gemäß Anspruch 2, wobei die Vielzahl der ersten Infrarot-Trocknungseinheiten (20) voneinander getrennt und entlang der Förderrichtung der Elektrodenfolie (200) angeordnet ist;
wobei ein Abstand (L1) zwischen jeweils zwei benachbarten ersten Infrarot-Trocknungseinheiten (20) der Vielzahl der ersten Infrarot-Trocknungseinheiten (20) im Bereich von 50 mm bis 800 mm liegt; und
wobei ein Abstand (d1) jeder der Vielzahl der ersten Infrarot-Trocknungseinheiten (20) zu einem Förderweg der Elektrodenfolie (200) im Bereich von 20 mm bis 150 mm liegt.

6. Die Trocknungsvorrichtung gemäß Anspruch 5, wobei die Vielzahl der zweiten Infrarot-Trocknungseinheiten (30) voneinander getrennt und entlang der Förderrichtung der Elektrodenfolie (200) angeordnet ist;
wobei ein Abstand (L2) zwischen jeweils zwei benachbarten zweiten Infrarot-Trocknungseinheiten (30) der Vielzahl der zweiten Infrarot-Trocknungseinheiten (30) größer ist als der Abstand zwischen zwei benachbarten ersten Infrarot-Trocknungseinheiten (20); und/oder
wobei ein Abstand (d2) jeder der Vielzahl der zweiten Infrarot-Trocknungseinheiten (30) zu einem Förderweg der Elektrodenfolie (200) größer ist als der Abstand der ersten Infrarot-Trocknungseinheit (20) zum Förderweg der Elektrodenfolie (200).

7. Die Trocknungsvorrichtung gemäß Anspruch 6, wobei
der Abstand (d1) der ersten Infrarot-Trocknungseinheit (20) zur Elektrodenfolie (200) im Bereich von 20 mm bis 150 mm liegt, und
der Abstand der zweiten Infrarot-Trocknungseinheit (30) zur Elektrodenfolie (200) größer ist als der Abstand der ersten Infrarot-Trocknungseinheit (20) zur Elektrodenfolie (200).

8. Die Trocknungsvorrichtung gemäß Anspruch 1, wobei
die Leistung jeder der zweiten Infrarot-Trocknungseinheiten (30), die elektromagnetische Wellen aussenden, geringer ist als die Leistung jeder der ersten Infrarot-Trocknungseinheiten (20), die elektromagnetische Wellen aussenden.

9. Die Trocknungsvorrichtung gemäß Anspruch 8, wobei
die Leistung jeder der zweiten Infrarot-Trocknungseinheiten (30), die elektromagnetische Wellen aussenden, um 5 % bis 60 % geringer ist als die Leistung jeder der ersten Infrarot-Trocknungseinheiten (20), die elektromagnetische Wellen aussenden.

10. Die Trocknungsvorrichtung gemäß Anspruch 1, wobei
die Vielzahl der ersten Infrarot-Trocknungseinheiten (20) so konfiguriert ist, dass
die Umgebungstemperatur einer Seite oberhalb der ersten Fläche der Elektrodenfolie (200) auf eine erste Temperatur erhöht wird;
die Vielzahl der zweiten Infrarot-Trocknungseinheiten (30) so konfiguriert ist, dass die Umgebungstemperatur einer Seite unterhalb der zweiten Fläche der Elektrodenfolie (200) auf eine zweite Temperatur erhöht wird.

11. Die Trocknungsvorrichtung gemäß Anspruch 10, wobei die zweite Temperatur um 5 % bis 60 % geringer ist als die erste Temperatur.

12. Ein Verfahren zum Trocknen einer Elektrodenfolie, durchgeführt durch die Trocknungsvorrichtung gemäß einem der Ansprüche 1 bis 11, wobei das Verfahren die folgenden Schritte umfasst:
Fördern (S1) einer zu trocknenden Elektrodenfolie zum Trocknungskanal, der sich im ersten Trocknungsabschnitt befindet; und
Trocknen (S2) von zwei gegenüberliegenden Seiten der Elektrodenfolie jeweils durch die Vielzahl der ersten Infrarot-Trocknungseinheiten (20) und die Vielzahl der zweiten Infrarot-Trocknungseinheiten (30).

## Revendications

1. Un dispositif de séchage, configuré pour sécher une feuille d'électrode (200), le dispositif de séchage comprenant :
un corps de boîte (10), définissant un canal de séchage (I) s'étendant à travers le corps de boîte (10), dans lequel la feuille d'électrode (200) peut être transportée dans le canal de séchage (I) ; le canal de séchage (I) comprend un premier côté (11) et un second côté (I2) opposé au premier côté (11), et le corps de boîte (10) comprend une première section de séchage (11) disposée le long de la direction de transport de la feuille d'électrode (200) ;
une pluralité de premiers ensembles de séchage infrarouge (20), disposés sur une paroi interne de la première section de séchage (11) et situés sur le premier côté (11) du canal de séchage (I) ; et
une pluralité de secondes ensembles de séchage infrarouge (30), disposés sur la paroi interne de la première section de séchage (11) et situés sur le second côté (I2) du canal de séchage (I).
**caractérisé en ce que** :
chacun des premiers ensembles de séchage infrarouge (20) comprend un premier substrat (21) et une première couche génératrice de chaleur (22) disposée sur le premier substrat (21) ;
où le premier substrat (21) est disposé sur la paroi interne de la première section de séchage (11) ;
la première couche génératrice de chaleur (22) est disposée sur un côté du premier substrat (21) proche de la feuille d'électrode (200) ;
la première couche génératrice de chaleur (22) comprend au moins l'un des éléments suivants : noir de carbone, poudre de graphite micro-nano, nanofibres de carbone, nanotubes de carbone et graphène ;
chacun des seconds ensembles de séchage infrarouge (30) comprend un second substrat (31) et une seconde couche génératrice de chaleur (32) disposée sur le second substrat (31) ;
où le second substrat (31) est disposé sur la paroi interne de la première section de séchage (11) ;
la seconde couche génératrice de chaleur (32) est disposée sur un côté du second substrat (31) proche de la feuille d'électrode (200) ;
la seconde couche génératrice de chaleur (32) comprend au moins l'un des éléments suivants : noir de carbone, poudre de graphite micro-nano, nanofibres de carbone, nanotubes de carbone et graphène.

2. Le dispositif de séchage selon la revendication 1, dans lequel :
le corps de boîte (10) comprend en outre une seconde section de séchage (12)
la première section de séchage (11) et la seconde section de séchage (12) sont reliées l'une à l'autre et sont disposées le long de la direction de transport de la feuille d'électrode (200) ; et
le dispositif de séchage comprend en outre une pluralité de troisièmes ensembles de séchage infrarouge, les troisièmes ensembles de séchage infrarouge étant disposés sur la paroi interne de la seconde section de séchage (12) et situés sur le premier côté (11) du canal de séchage (I).

3. Le dispositif de séchage selon la revendication 2, dans lequel :
le corps de boîte (10) comprend en outre une troisième section de séchage (13), la troisième section de séchage (13) étant reliée à une extrémité de la seconde section de séchage (12) éloignée de la première section de séchage (11) ; et
le dispositif de séchage comprend en outre un ensemble de pré-roulage-pressage (60) ;
l'ensemble de pré-roulage-pressage (60) est disposé sur une paroi interne de la troisième section de séchage (13) ;
l'ensemble de pré-roulage-pressage (60) comprend un premier rouleau (61) et un second rouleau (62) opposé au premier rouleau (61) ;
le premier rouleau (61) est situé sur le premier côté (11) du canal de séchage (I)
le second rouleau (62) est situé sur le second côté (I2) du canal de séchage (I) ; un écart est défini entre le premier rouleau (61) et le second rouleau (62).

4. Le dispositif de séchage selon la revendication 2, dans lequel :
la longueur d'onde des ondes électromagnétiques émises par la pluralité de premiers ensembles de séchage infrarouge (20), la longueur d'onde des ondes électromagnétiques émises par la pluralité de seconds ensembles de séchage infrarouge (30), et la longueur d'onde des ondes électromagnétiques émises par la pluralité de troisièmes ensembles de séchage infrarouge sont comprises dans une plage de 2,5 µm à 25 µm.

5. Le dispositif de séchage selon la revendication 2, dans lequel :
la pluralité de premiers ensembles de séchage infrarouge (20) sont espacés les uns des autres et sont disposés le long de la direction de transport de la feuille d'électrode (200) ;
un espacement (L1) entre deux premiers ensembles de séchage infrarouge (20) adjacents de la pluralité de premiers ensembles de séchage infrarouge (20) est compris dans une plage de 50 mm à 800 mm ; et
une distance (d1) de chacun des premiers ensembles de séchage infrarouge (20) à un chemin de transport de la feuille d'électrode (200) est comprise dans une plage de 20 mm à 150 mm.

6. Le dispositif de séchage selon la revendication 5, dans lequel :
la pluralité de seconds ensembles de séchage infrarouge (30) sont espacés les uns des autres et sont disposés le long de la direction de transport de la feuille d'électrode (200) ;
un espacement (L2) entre deux seconds ensembles de séchage infrarouge (30) adjacents de la pluralité de seconds ensembles de séchage infrarouge (30) est supérieur à l'espacement entre les deux premiers ensembles de séchage infrarouge (20) adjacents ; et/ou
une distance (d2) de chacun des seconds ensembles de séchage infrarouge (30) au chemin de transport de la feuille d'électrode (200) est supérieure à la distance du premier ensemble de séchage infrarouge (20) au chemin de transport de la feuille d'électrode (200).

7. Le dispositif de séchage selon la revendication 6, dans lequel :
la distance (d1) du premier ensemble de séchage infrarouge (20) à la feuille d'électrode (200) est comprise dans une plage de 20 mm à 150 mm ; et
la distance du second ensemble de séchage infrarouge (30) à la feuille d'électrode (200) est supérieure à la distance du premier ensemble de séchage infrarouge (20) à la feuille d'électrode (200).

8. Le dispositif de séchage selon la revendication 1, dans lequel :
la puissance de chacun des seconds ensembles de séchage infrarouge (30) émettant des ondes électromagnétiques est inférieure à la puissance de chacun des premiers ensembles de séchage infrarouge (20) émettant des ondes électromagnétiques.

9. Le dispositif de séchage selon la revendication 8, dans lequel :
la puissance de chacun des seconds ensembles de séchage infrarouge (30) émettant des ondes électromagnétiques est inférieure de 5 % à 60 % à la puissance de chacun des premiers ensembles de séchage infrarouge (20) émettant des ondes électromagnétiques.

10. Le dispositif de séchage selon la revendication 1, dans lequel :
la pluralité de premiers ensembles de séchage infrarouge (20) est configurée pour élever la température ambiante d'un côté au-dessus d'une première face de la feuille d'électrode (200) à une première température ;
la pluralité de seconds ensembles de séchage infrarouge (30) est configurée pour élever la température ambiante d'un côté en dessous d'une seconde face de la feuille d'électrode (200) à une seconde température.

11. Le dispositif de séchage selon la revendication 10, dans lequel :
la seconde température est inférieure de 5 % à 60 % à la première température.

12. Un procédé de séchage d'une feuille d'électrode, réalisé par le dispositif de séchage selon l'une quelconque des revendications 1 à 11, le procédé comprenant les étapes suivantes :
la circulation (S1) d'une feuille d'électrode à sécher dans le canal de séchage situé dans la première section de séchage ; et
le séchage (S2) respectivement des deux faces opposées de la feuille d'électrode par la pluralité de premiers ensembles de séchage infrarouge et la pluralité de seconds ensembles de séchage infrarouge.
